(19) Europäisches Patentamt
European Patent Office
Office européen des brevets

(11) Veröffentlichungsnummer: **0 029 948**
**B1**

(12) **EUROPÄISCHE PATENTSCHRIFT**

(45) Veröffentlichungstag der Patentschrift: **30.01.85**

(51) Int. Cl.$^4$: **C 08 F 283/00**, C 08 L 51/08, C 09 K 3/00

(21) Anmeldenummer: **80107096.2**

(22) Anmeldetag: **15.11.80**

(54) **Co-Pfropfpolymerisatdispersionen, Verfahren zu deren Herstellung und deren Verwendung.**

(30) Priorität: **28.11.79 DE 2947966**

(43) Veröffentlichungstag der Anmeldung:
**10.06.81 Patentblatt 81/23**

(45) Bekanntmachung des Hinweises auf die Patenterteilung:
**30.01.85 Patentblatt 85/05**

(84) Benannte Vertragsstaaten:
**BE DE FR GB IT NL**

(56) Entgegenhaltungen:
**FR-A-1 579 295**
**GB-A- 801 529**
**US-A-3 075 941**
**US-A-3 488 304**

(73) Patentinhaber: **BAYER AG**
**Konzernverwaltung RP Patentabteilung**
**D-5090 Leverkusen 1 Bayerwerk (DE)**

(72) Erfinder: **Alberts, Heinrich, Dr.**
**Morgengraben 16**
**D-5000 Koeln 80 (DE)**
Erfinder: **Friemann, Hans, Dr.**
**Silesiusstrasse 82**
**D-5000 Koeln 80 (DE)**
Erfinder: **Sattlegger, Hans, Dr.**
**Auf dem Heidchen 9**
**D-5068 Odenthal (DE)**
Erfinder: **Moretto, Hans-Heinrich, Dr.**
**Formesstrasse 13**
**D-5000 Koeln 80 (DE)**

**EP 0 029 948 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft bei Raumtemperatur härtbare stabile Copfropfpolymerisatdispersionen, die als Erstpolymere OH-funktionelle Organopolysiloxane und als Zweitpolymere Polyesterurethane oder Polyesterurethane und Polyester oder Polycarbonate und gegebenenfalls Polyurethane und Polyether sowie in Gegenwart von Mischungen aus diesen Erstpolymeren und Zweitpolymeren polymerisierte Einheiten aus Vinylmonomeren und über Vinylpolymerisatbrücken verknüpfte Einheiten aus Erst- und Zweitpolymeren enthalten, ein Verfahren zu ihrer Herstellung und die Verwendung dieser Copfropfpolymerisatdispersionen.

Bei Raumtemperatur härtende Polymersysteme auf Basis von Organopolysiloxanen sind bekannt, vgl. W. Noll. Chemie und Technologie der Silikone, Verlag Chemie GmbH, 1968, S. 391 ff. Ferner ist die Herstellung von modifizierten Organopolysiloxanen nach verschiedenen Arbeitsweisen möglich und bekannt. Pfropfpolymere aus Organosilaxanen und Vinylpolymeren sind beispielsweise in den Patentschriften GB 766 528, GB 806 582, GB 869 482 und DAS 1 694 973 beschrieben. In der DAS 1 694 973 wird die Anwendung von Organopolysiloxanen mit aufgeprfropfter organischer Kette und maximal 25% Arylresten in bei Raumtemperatur härtenden 1- oder 2-Komponentenmassen beschrieben. Es wird ausgeführt, daß die erfindungsgemäß eingesetzten Hydroxypolysiloxane in jedem Fall bis zu maximal 25% Arylreste enthalten. Ferner wird ausgeführt, daß die aufgepfropfte organische Kette durch polymerisierte Einheiten von Vinylmonomeren, bevorzugt Styrol und Acrylester, gebildet wird.

Neben den durch Pfropfung modifizierten Organopolysiloxanen sind auch Systeme bekannt, in denen ein ungesättigter Polyester mit einem funktionellen Organopolysiloxan cokondensiert wird. Das erhaltene Cokondensat wird in einem Vinylmonomeren gelöst und das System radikalisch ausgehärtet. In der Anmeldung GB 801 529 werden z.B. ausgehärtete Harze beansprucht, die zu 25—75 Gew.-% aus einem ungesättigten Polyester, 25—75 Gew.-% Vinylpolymerisat und 0,5—30 Gew.-% einer Siloxan-komponente bestehen. Derartige, während der Vinylpolymerisation durch die Vernetzungsreaktion mit dem ungesättigten Polyester-Organosiloxan-Cokondensat aushärtende, vernetzte und unlösliche Formkörper bildende Massen, sind für die Herstellung von bei Raumtemperatur härtenden Organosiloxanmassen nicht geeignet.

Aliphatische oder gemischt aliphatisch-aromatische Polyester Polyether oder Polycarbonate sind wichtige technische Ausgangsprodukte für z.B. Polyurethane und Lacke. Mischungen aus derartigen Polyestern oder Polyesterurethanen und Organopolysiloxanen sind instabil und nicht lagerfähig, da nach der erfolgten Vermischung in kurzer Zeit eine Trennung der unverträglichen Phasen erfolgt.

Obwohl es wünschenswert wäre, die ausgezeichneten anwendungstechnischen Eigenschaften, die von aliphatischen oder gemischt aliphatisch-aromatischen Polyestern oder Polyethern in Polyurethansystemen oder Lacken herrühren—genannt seien Flexibilität und Elastizität, gegebenenfalls Härte und Glanz, Alterungsbeständigkeit usw.—auch zur Herstellung von Organosiloxan-Elastomeren auszunutzen, gelang dies bis heute nicht.

Ferner ist ein gravierende anwendungstechnischer Nachteil der bis heute bekannten Siliconelastomeren oder sonstigen Siliconmassen, daß aus diesen Mengen hergestellte Körper nicht oder qualitativ nur äußerst unbefriedigend zu lackieren sind. Üblicherweise bildet der frisch aufgetragene Lack nur für kurze Zeit eine zusammenhängende Deckschicht aus, die sich im allgemeinen beim Trocknen aber von der Siliconoberfläche ablöst oder mehr oder weniger große Flächen nicht lackierter Oberfläche freigibt.

Aufgabe der Erfindung war es daher, phasenstabile und Mehrphasensysteme aus Organopolysiloxanen, aliphatischen und gemischt aliphatisch-aromatischen Polyesterurethanen oder Polyesterurethanen und Polyestern oder Polycarbonaten und gegebenenfalls Polyetherurethanen und Polyethern zur Verfügung zu stellen.

Es war ferner Aufgabe der Erfindung, Siliconmassen bereitzustellen, die, gegebenenfalls nach Zugabe von Weichmachern, wie z.B. methylendgestoppten Organopolysiloxanen, Füllstoffen, Vernetzern, Vernetzungskatalysatoren und die Vernetzung beschleunigenden Komponenten und nach der in der an sich bekannten Weise erfolgten Vernetzung bei Raumtemperatur, problemlos lackierbar sind.

Beide Aufgaben wurden dadurch gelöst, daß Mischungen aus Organopolysiloxanen als Erstpolymeren, Polyesterurethanen oder Polyesterurethanen und Polyester oder Polycarbonaten gegebenenfalls ihren Mischungen mit Polyethern oder Polyetherurethanen als Zweitpolymeren und Vinylmonomeren, gegebenenfalls unter Zusatz von Mono-, Di- oder Polyisocyanaten in Gegenwart von Radikalbildnern einer radikalischen Polymerisation unterzogen werden. Man erhält stabile Dispersionen, die aus Erstpolymeren, Zweitpolymeren und polymerisierten Einheiten eines oder mehrerer Vinylmonomer bestehen und die dadurch gekennzeichnet sind, daß sie über polymerisierte Einheiten der eingesetzten Vinylmonomeren querverbrückte Pfropfcopolymere aus Erstpolymeren und den eingesetzten Zweitpolymeren enthalten.

Somit sind Gegenstand der Erfindung bei Raumtemperatur härtbare, stabile Copfropfpolymerisatdispersionen, erhältlich durch Pfropfpolymerisation von Vinylmonomeren in Gegenwart von

Mischungen aus Erst- und Zeitpolymeren, wobei als Erstpolymer OH-funktionelle Diorganopolysiloxane der Formel

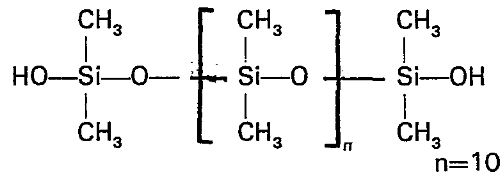

n=10 bis 5000

wobei die Methylgruppen bis zu 30 Mol.-% durch Ethyl-, Vinyl- oder Phenylgruppen ersetzt sein können und als Zweitpolymere 1) durch Umsetzung mit Mono- oder Polyisocyanaten urethanisierte aliphatische oder gemischt aliphatisch-aromatische Polyester mit einem Molekulargewicht von etwa 800 bis 10 000, einer OH-Zahl zwischen 0,1 und 80, und/oder Polycarbonaten oder 2) durch Umsetzung mit Mono- oder Polyisocyanaten urethanisierte Gemische aus den genannten Polyester und/oder Polycarbonaten einerseits und aliphatischen Polyethern bzw. Polythioethern mit 1—8 OH-Gruppen andererseits, eingesetzt werden und wobei Copfropfpolymerisatdispersionen erhalten werden, die über Vinylpolymerisatbrücken verknüpfte Pfropfpolymere aus Erst- und Zweitpolymeren enthalten und die aus

I. 10—90 Gew.-% endständig OH-funktionellen Organopolysiloxanen
II. 5—85 Gew.-% durch Umsetzung mit Mono- oder Polyisocyanaten urethanisierte aliphatische oder gemischt aliphatisch-aromatische Polyester und/oder Polycarbonate gegebenenfalls im Gemisch mit durch Umsetzung mit Mono- oder Polyisocyanaten urethanisierten Polyethern und
III. 5—85 Gew.-% polymerisierten Einheiten aus Vinylverbindungen bestehen, wobei die Summe der Komponenten I—III stets 100% beträgt.

Gegenstand der Erfindung sind ferner Copfropfpolymerisatdispersionen, wobei die Komponente III aus

5—85 Gew.-% polymerisierten Einheiten aus Vinylacetat, sowie
0—40 Gew.-% polymerisierten Einheiten aus (Meth)Acrylsäurealkylester mit 1—8 C-Atomen in der Esteralkylkomponente, (Meth)Acrylsäureamid, N-Alkylsubstituierten (Meth)Acrylsäureamiden, Maleinimiden, (Meth)Acrylnitril sowie ihren Gemische, besteht.

Ferner sind Gegenstand der Erfindung Copfropfpolymerisatdispersionen, wobei die Komponente III aus

5—85 Gew.-% polymerisierten Einheiten aus

a) 5—90 Gew.-% Styrol,
b) 10—95 Gew.-% (Meth)acrylsäurealkylestern mit 1—8 C-Atomen in der Esteralkylkomponente,
c) 0—85 Gew.-% (Meth)Acrylnitril,

wobei die Summe der Komponenten IIIa)—c) stets 100% beträgt, besteht.

Ferner ist Gegenstand der Erfindung eine Verfahren zur Herstellung von Copfropfpolymerisatdispersionen, dadurch gekennzeichnet, daß Mischungen aus
a) 8—90 Gew.-% endständig OH-funktionellen Organopolysiloxanen,
b) 4,999—85 Gew.-% aliphatischen oder gemischt aliphatisch-aromatischen Polyesterurethanen oder Polyesterurethanen und Polyestern oder Polycarbonaten und gegebenenfalls Polyetherurethanen und Polyethern.
c) 5—85 Gew.-% eines oder mehrerer Vinylmonomerer,
d) 0,001—2 Gew.-% eines oder mehrerer Radikalbildner,

wobei die Summe der Komponenten a)—d) stets 100% beträgt, bei Temperaturen bis 250°C einer Polymerisationsreaktion unterzogen werden.

Ferner ist Gegenstand der Erfindung ein Verfahren zur Herstellung von Copfropfpolymerisatdispersionen, dadurch gekennzeichnet, daß Mischungen aus
a) 8—90 Gew.-% endständig OH-funktionellen Organopolysiloxanen,
b) 4,999—80 Gew.-% aliphatischen oder gemischt aliphatisch-aromatischen Polyestern oder Polycarbonaten und gegebenenfalls Polyethern,
c) 4,9—80 Gew.-% eines oder mehrerer Vinylmonomerer,

d) 0,001—2 Gew.-% eines oder mehrerer Radikalbildner,
e) 0,1—10 Gew.-% Mono-, Di- oder Polyisocyanaten,

wobei die Summe der Komponenten a)—e) stets 100% beträgt, bei Temperaturen bis 250°C einer Polymerisations- und Urethanisierungsreaktion unterzogen werden.

Gegenstand der Erfindung sind ferner bei Raumtemperatur vernetzbare Organopolysiloxanmassen, die Copfropfpolymerisatdispersionen und zusätzlich Vernetzer, Härtungskatalysatoren, Füllstoffe und gegebenenfalls weitere Zuschlagstoffe enthalten.

Ferner ist Gegenstand der Erfindung die Verwendung von bei Raumtemperatur vernetzbaren Organopolysiloxanmassen, die die erfindungsgemäßen Copfropfpolymerisatdispersionen enthalten, als Ein- oder Zweikomponentensysteme für Dichtungsmassen.

Die Herstellung der Copfropfpolymerisatdispersionen geschieht in der Weise, daß Mischungen aus einem endständig OH-funktionellen Organopolysiloxan, einem aliphatischen oder gemischt aliphatisch-aromatischen Polyester, Polycarbonat oder Polyesterurethan gegebenenfalls einem Polyether oder Polyetherurethan und einem oder mehrerer Vinylmonomerer und gegebenenfalls Mono-, Di- oder Polyisocyanate auf eine Reaktionstemperatur gebracht werden, bei der die radikalische Polymerisation und gleichzeitig die Urethanisierung ausreichend schnell ablaufen. Falls erwünscht, können auch Mischungen aus endständig OH-funktionellen und nicht funktionellen Organopolysiloxanen in die Reaktionsmischung eingetragen werden. Die Polymerisation kann nach kontinuierlichem oder diskontinuierlichem Verfahren durchgeführt werden. Im Prinzip ist die Reihenfolge der Zugabe der zur Reaktion zu bringenden Komponenten beliebig, die besten Resultate werden aber erzielt, wenn Mischungen aus Siloxan- und Polyesterkomponente und Vinylmonomeren gleichzeitig bei der Durchführung der Polymerisationsreaktion eingesetzt werden.

Die endständig OH-funktionellen Organopolysiloxane werden durch die folgende Formel dargestellt:

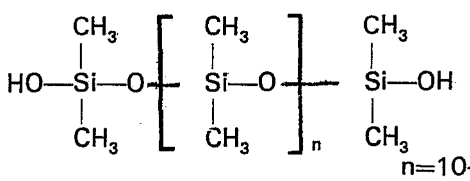

n=10—5000

Neben Methylgruppen können bis zu 30 Mol.-% Ethyl, Vinyl- und Phenylgruppen in den Organopolysiloxankomponenten enthalten sein, bevorzugt werden aber methylsubstituierte Organopolysiloxane eingesetzt.

Die für die Copfropfpolymerisation eingesetzten aliphatischen oder gemischt aliphatisch-aromatischen Polyester werden in an und für sich bekannter Weise durch Veresterungs- oder Umesterungsrekation von Gemischen aus aliphatischen oder aromatischen Dicarbonsäuren, ihren Anhydriden oder Estern und aliphatischen Dialkoholen hergestellt, vgl. Ullmanns Enzyklopädie der technischen Chemie, 14. Band, Urban u. Schwarzenberg, München, 1963, S. 80 ff.

Als Dicarbonsäuren werden vorzugsweise eingesetzt Adipinsäure, Sebacinsäure, Terephthalsäure, Phthalsäure, Isophthalsäure, Maleinsäure, Fumarsäure, Itaconsäure; als mehrwertige Alkohole werden vorzugsweise eingesetzt Ethylenglykol, Propandiol-1,2 und -1,3, Butandiol-1,3 und -1,4, Hexandiol-1,6, 2,2-Dimethylpropandiol-1,3 und Polyethylen- und Polypropylenglykole oder mehrwertige aliphatische Alkohole, die 2—7 Etheratome im Molekül enthalten, vgl. DAS 10 54 620.

Für verzweigte Polyester werden höherfunktionelle Carbonsäuren oder Alkohole eingesetzt, erwähnt seien Glycerin, 1,1,1-Trimethylolpropan, Hexantriol und Pentaerythrit, vgl. ferner DBP 1 105 160 und DAS 1 029 147. Die Molekulargewichte der Polyester liegen zwischen 800 und 10 000, die OH-Zahlen zwischen 0,1 und 80. Die Restwassergehalte der Polyester liegen im allgemeinen unter 0,1%. Falls gewünscht, können auch spezielle Polyester mit z.B. enger Molekulargewichtsverteilung eingesetzt werden, die durch Polymerisation von Lactonen, wie z.B. $\beta$-Propiolacton, $\gamma$-Butyrolacton oder $\varepsilon$-Caprolactam erhalten werden, oder deren Synthese durch Copolymerisation von Epoxiden mit cyclischen Anhydriden erfolgte, vgl. K. Hamann, Makrom. Chem. 51 (1962) 53 und R. F. Fischer, J. Poly. Sci. 44 (1960) 155.

Geeignete Polyester im Sinne der Erfindung sind auch Polycarbonate oder Mischesterpolycarbonate, die durch Umesterungsreaktion mit z.B. Diphenylcarbonat erhalten werden können, beispielhaft seien aufgeführt Butylenglykolpolycarbonat, Hexandiol-1,6-polycarbonat. Entsprechende reinaliphatische Polycarbonate sind auch durch ringöffnende Polymerisation von z.B. Glykolcarbonat oder durch Copolymerisation von Epoxiden mit Kohlendioxid erhältlich.

Die Polyester können alleine, in Mischungen mit anderen Polyestern oder gegebenenfalls Polyethern eingesetzt werden.

Auch die erfindungsgemäß in Frage kommenden, mindestens eine, in der Regel zwei bis acht, vorzugsweise zwei bis drei, Hydroxylgruppen im Molekül aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$,

oder durch Anlagerung dieser Epoxide, gegebenenfalls im Gemisch oder nacheinander, an Startkomponenten mit reaktionsfähigen Wasserstoffatomen wie Wasser, Alkohole oder Amine, z.B. Ethylenglykol, Propylenglykol-(1,3) oder -(1,2), Trimethylolpropan, 4,4'-Dihydroxyglykol-(1,3) oder -(1,2), Trimethylolpropan 4,4'-Dihydroxydiphenylpropan, Anilin, Ammoniak, Ethanolamin, Ethylendiamin hergestellt. Auch Sucrosepolyether, wie sie z.B. in den deutschen Auslegeschriften 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol, Acrylnitril in Gegenwart von Polyethern entstehen (amerikanische Patentschriften 3 383 351, 3 304 273, 3 523 093, 3 110 695, deutsche Patentschrift 1 152 536), sind ebenfalls geeignet, ebenso OH-Gruppen aufweisende Polybutadiene.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester, Polythioetheresteramide.

Die eingesetzten aliphatischen und gemischt aliphatisch-aromatischen Polyester und Polyether werden mindestens teilweise urethanisiert. Die Urethanisierung der freien OH-Funktionen des Polyesters und Polyethers erfolgt in bekannter Weise durch Umsetzung mit stöchiometrischer, unter- oder überschüssige Menge Mono-, Di- oder Polyisocyanat. Hierfür finden alle bekannten aliphatischen, aromatischen und aliphatisch-aromatischen Isocyanate Verwendung, bevorzugt werden die technisch leicht zugänglichen Isocyanate wie z.B. Cyclohexylisocyanat, Phenylisocyanat, Hexamethylendiisocyanat, Phenylendiisocyanat, Toluylendiisocyanat oder 4,4'-Diisocyanatodiphenylmethan eingesetzt.

Die Urethanisierung kann vor, während oder nach der Pfropfpolymerisation erfolgen. Die Urethanisierung erfolgt bei erhöhten Temperaturn sehr rasch, falls gewünscht, kann nicht umgesetztes Isocyanat abgezogen werden. Die Urethanisierung läßt sich ohne Nachteil für den weiteren Reaktionsverlauf auch während der Polymerisation der Vinylverbindungen durchführen. Ferner ist es selbstverständlich möglich, die gebildete Pfropfdispersion auch erst nach der abgeschlossenen Vinylpolymerisation mit dem Isocyanat umzusetzen.

Als Vinylmonomere seien beispielhaft aufgeführt: Olefine wie Ethylen, Propylen, Isobutylen, Vinylester aliphatische oder aromatische Carbonsäuren, vorzugsweise Vinylacetat, Vinylpropionat, $\alpha,\beta$-ungesättigte Mono- oder Dicarbonsäuren und ihre Derivate, erwähnt seien (Meth)acrylsäure, Methyl(meth)acrylat, Ethyl(meth)acrylat, Propyl- bzw. isopropyl(meth)acrylat, n-Butyl-, iso- oder tert.-Butyl(meth)acrylat, 2-Ethylhexyl(meth)acrylat, (Meth)Acrylamid, N-Alkyl-substituierte (Meth)acrylamidderivate, (Meth)Acrylnitril, Maleinsäureanhydrid, Maleinsäureimid, N-Alkyl-Maleinimide, Maleinsäure-halb- oder -diester, Vinylaromaten wie Styrol, $\alpha$-Methylstyrol, 4-Chlorstyrol, Vinylchlorid, Vinylidenchlorid, Vinylidenfluorid, Tetrafluorethylen, Vinylether wie Ethylvinylether oder n-Butylvinylether; aus der Reihe der Allylverbindungen seien angeführt Allylalkohol, Allylacetat, 2-Methylenpropan-1,3-dioldiazetat, 2-Methylenpropandiol-1,3, Allylethylcarbonat, Allylphenylcarbonat. Falls die Vernetzung oder Erhöhung der Molekulargewichte der Vinylharzphase gewünscht wird, können Divinylverbindungen oder Diallylverbindungen eingesetzt werden. Erwähnt seien Divinylbenzol, (Meth)Acrylsäureester mehrwertiger Alkohole wie z.B. Ethylenglykoldimethacrylat, Diethylenglykoldiacrylat und Divinylether.

Die radikalische Polymerisation der Vinylmonomeren kann in an und für sich bekannter Weise mit Hilfe von Radikalbildnern, UV-Strahlen, $\alpha,\beta$- oder $\gamma$-Strahlen oder thermisch ohne weitere Zusätze gestartet werden. Die strahlungsinitiierte Polymerisation wird vorzugsweise in Gegenwart von Sensibilisatoren durchgeführt, vgl. z.B. A. A. Jenkins, A. Ledwith, Reactivity, Mechanism and Structure in Polymer Chemistry, John Wiley & Sons, London, New York, 1974, S. 465.

Um die radikalische Polymerisation der Vinylmonomeren zu starten, werden Radikalbildner in Mengen zwischen 0,001 bis 2, vorzugsweise 0,02 bis 0,8 Gew.-%, bezogen auf die Gesamtmischung aus Erstpolymer, Zweipolymer und Vinylmonomere eingesetzt. Als Radikalbildner seien beispielhaft aufgeführt Azo-Initiatoren wie Bis-isobuttersäuredinitril (AIBN), Azoester, Azo-Iminoester oder Azo-N-Alkylamide, Peroxide wie di-tert.-Butylperoxid, Di-Cumylperoxid Di-Benzoylperoxid, Perester wie Amylperpivalat, tert.-Butylperpivalat, tert.-Butylperoctoat, t-Butylperbenzoat, tert.-Butylperneodecanoat, Percarbonate wie Cyclohexylpercarbonat oder Bisisopropylpercarbonat, oder Hydroperoxide wie z.B. Cumylhydroperoxid, tert.-Butylhydroperoxid.

Geeignete Initiatoren sind ferner Benzpinakol, Benzpinakolderivate oder andere thermisch labile hochsubstituierte Ethanderivate.

Die Polymerisation kann ferner mit Hilfe von Redoxsystemen bei tieferen Temperaturen als den rein thermischen Zerfallstemperaturen der Radikalbildner gestartet werden.

Als Redox-Initiatoren seien beispielhaft erwähnt Kombinationen aus Peroxiden und Aminen, wie z.B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallsalzen oder Peroxid/Schwefeldioxid-Systeme.

Die Polymerisationsreaktion kann kontinuierlich oder diskontinuierlich, drucklos oder bei

Reaktionsdrucken bis z.B. 300 bar, vorzugsweise bis 15 bar, bei Reaktionstemperaturen zwischen −20°C und +250°C, vorzugsweise 70 bis 190°C, durchgeführt werden. Falls gewünscht, kann die Polymerisation auch in Gegenwart von Lösungsmitteln oder Verdünnungsmitteln durchgeführt werden, genannt seien Wasser, Alkohole, wie Methanol, Ethanol, tert.-Butanol, aliphatische oder aromatische Kohlenwasserstoffe, Halogenkohlenwasserstoffe wie Chlorbenzol oder fluorierte Verbindungen, Ether wie Dioxan oder Tetrahydrofuran, Ester wie z.B. Essigsäureethylester. Vorzugsweise wird die Polymerisation aber lösungsmittelfrei durchgeführt.

Falls gewünscht, kann die Polymerisationsrekation in Gegenwart von Molekulargewichtsreglern durchgeführt werden. Als Regler seien aufgeführt Mercaptane wie n- oder tert.-Dodecylmercaptan, Thioglykol, Thioglycerin oder Thioessigsäureester. Ferner schwefelfreie Molekulargewichtsregler wie Kohlenwasserstoffe, beispielhaft seien genannt Paraffinfraktionen wie z.B. Petrolether, Leicht- oder Waschbenzin, $\alpha$-Olefine wie z.B. Propylen, Isobutylen, Buten-1, ferner Ketone wie z.B. Aceton, Methylethylketon oder Cyclohexanon, ferner Aldehyde wie z.B. Formaldehyd, Acetaldehyd, Propionaldehyd, Isobutyraldehyd oder Allylverbindungen wie z.B. Allylalkohol, Allylacetat, 2-Methylenpropan-1,3-dioldiazetat oder Allylcarbonate. Als Telogene kommen ferner in Frage Halogenkohlenwasserstoffe wie Methylenchlorid, Tetrachlorethan, Dibromethan usw. Wie zu erwarten, lassen sich mit Hilfe derartiger Regler die Viskositäten der Dispersionen steuern.

Die Umsetzung der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so daß mindestens 80% der eingesetzten Monomeren, vorzugsweise aber mehr als 90% umgesetzt werden. Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1000 ppm, vorzugsweise unter 100 ppm.

Falls gewünscht, können nach beendeter Polymerisation in den Ansatz Antidioxidantien, Stabilisatoren, UV-Absorber, Alterungsschutzmittel, Weichmacher, fungistatisch und bakteriostatisch wirkende Substanzen eingetragen werden.

Ferner können die üblicherweise bei der Herstellung von Silikon-Elastomeren verwendeten Füllstoffe eingesetzt werden. Derartige Füllstoffe sind z.B. Kieselsäuren, die nach verschiedenen Verfahren hergestellt wurden und unterschiedliche spezifische Oberflächen aufweisen.

Die erfindungsgemäß erhaltenen Silicon-Polyester-Vinylpolymer-Dispersionen sind besonders für die Verwendung in bei Raumtemperatur härtenden 1- und 2-Komponentenmassen geeignet. Solche Massen, die nach dem Kondensationsprinzip aushärten, bestehen bekanntlich aus Hydroxylendblockierten Polydiorganosiloxanen, Vernetzern, Füllstoffen und Katalysatoren.

In diesen Massen können die hydroxylendblockierten Polydiorganosiloxane ganz oder teilweise durch die erfindungsgemäßen Copfropfpolymerisationsdispersionen ersetzt werden. Als Vernetzer werden Silane mit mindesens 3 hydrolytisch leicht abspaltbaren Gruppen im Molekül wie Carbonsäuren, Carbonsäureamide, Oxime, Aminoxide und Amine eingesetzt. Verstärkende Füllstoffe sind z.B. pyrogen erzeugtes Siliciumdioxid, als nicht verstärkender Füllstoff kommt z.B. Kreide in Frage. Als Katalysatoren verwendet man u.a. organische Zinnverbindungen wie Dibutylzinndilaurat.

Siliconmassen, in denen die erfindungsgemäßen Copfropfpolymerisat-Dispersionen verwendet werden, zeigen im Vergleich mit den bisher bekannten Siliconmassen eine wesentlich verbesserte Überstreichbarkeit mit handelsüblichen Lacken, die z.B. auf Alkydharz- oder Polyurethanbasis beruhen. Die bei Raumtemperatur ausgehärteten Siliconmassen, in denen die erfindungsgemäßen Copfropfpolymerisate als aufbauende Bestandteile enthalten sind, können wie Holz lackiert werden. Ferner werden bei diesen neuartigen Systemen ausgezeichnete Haftung, auch bei Nässe, auf Holz, Metallen und Beton festgestellt.

Die folgenden Beispiele erläutern die Herstellung der erfindungsgemäßen Silicon-Zweitpolymer-Vinylmonomerdispersionen. Wenn nicht anders vermerkt, sind Mengenangaben als Gewichtsteile bzw. Gewichtsprozente zu verstehen.

Experimenteller Teil

Die Herstellung der OH-funktionellen Polysiloxane geschieht in der literaturbekannten Verfahrensweise, vgl. W. Noll, Chemie und Technologie der Silicone, Verlag Chemie GmbH, Weinheim/Bergstr., 2. Auflage, 1968, Kap. 5, S. 162 ff.

Die in den Beispielen aufgeführten OH-funktionellen Polydimethylsiloxane sind wie folgt gekennzeichnet

| OH-Polysiloxan-Nr. | Viskosität (mPas) bei 20°C |
|---|---|
| 1 | 5 000 |
| 2 | 10 000 |
| 3 | 18 000 |
| 4 | 50 000 |

Die Herstellung der Polyester erfolgt durch Schmelzkondensation unter Abdestillation des gebildeten Reaktionswassers bis zum Erreichen der gewünschten OH- bzw. Säurezahlen, vgl. Houben-Weyl, Methoden der Organischen Chemie, Bd. XIV/2, Georg Thieme-Verlag, Stuttgart, 1963, S. 1 ff. In der Tabelle 1 sind die wichtigsten Kenndaten der verwendeten Polyester zusammengefaßt.

TABELLE 1

| Bezeichnung des Polyesters bzw. des Polycarbonats | Zusammensetzung des Polyesters | OH-Zahl | Säurezahl |
|---|---|---|---|
| A | Adipinsäure-Diethylenglykol | 40 | <1 |
| B | Adipinsäure, Ethylenglykol, Butandiol-1,4 | 55 | <1 |
| C | Hexandiol-polycarbonat | 58 | 0,1 |

Polyether A ist ein trifunktioneller Misch-Polyether aus Ethylenoxid und Propylenoxid. Die OH-Zahl beträgt 49, die Viskosität bei 20°C 520 mPas.

Beispiel 1

In einem 6 1-Rührkessel wird die Vorlage eingefüllt und unter Stickstoff auf 110°C erwärmt. Dann wird eine Lösung 1 innerhalb von 2 h hinzugegeben, anschließend die Lösung 2 innerhalb von 5 min., sodann wird 2 h bei 110°C gerührt. Flüchtige Anteile werden im Hochvakuum bei 120°C abgezogen.

| | | | Lsg. 1 | | | Lsg. 2 | |
|---|---|---|---|---|---|---|---|
| Beispiel Nr. | Vorlage Polysiloxan 1 | Polyester A | Polysiloxan 1 | Vinylacetat | tert. Butyl-perpivalat | Cyclohexyl-isocyanat | tert. Butyl-perpivalat |
| 1 | 1600 | 1000* | 400 | 1000 | 4,5 | 62 | 2,25 |

| | | Zusammensetzung in Gew.-% | | | |
|---|---|---|---|---|---|
| Beispiel Nr. | Viskosit. mPas | Polysiloxan | Polyester-urethan | Vinylacetat | OH-Zahl |
| 1 | 30 000 | 50,8 | 25,4 | 23,8 | 3,5 |

* Polyester 2 h bei 120°C, 0,13 mbar (0,1 Torr) entwässert.

Beispiel 2—4

Die Vorlage wird unter Stickstoff auf 110°C erwärmt. Eine Lösung wird innerhalb von 1 h hinzugegeben und dann 1 h bei 110°C nachgerührt. Die flüchtigen Anteile werden im Vakuum bei 110—120°C abgezogen.

| Beispiel Nr. | Vorlage Polysiloxan 1 | Polyester A | Polyester B | Polyether A | Hexamethylen-diisocyanat | Cyclohexyl-isocyanat | Lösung Vinylacetat | Polysiloxan 1 | tert. Butylperpivalat |
|---|---|---|---|---|---|---|---|---|---|
| 2 | 1600 | 800 | | 200 | 70 | 42 | 1000 | 400 | 6,0 |
| 3 | 1600 | | 800 | 200 | 70 | 42 | 1000 | 400 | 6,0 |
| 4 | 1600 | | 1000 | | 70 | 42 | 1000 | 400 | 6,0 |

| Beispiel Nr. | Viskosität mPas | Zusammensetzung Polysiloxan | Polyesterurethan | Polyetherurethan | Polyvinylacetat | OH-Zahl |
|---|---|---|---|---|---|---|
| 2 | 72000 | 50,1 | 22,3 | 5,6 | 22,0 | 0,5 |
| 3 | 64000 | 50,1 | 22,3 | 5,6 | 22,0 | 3,5 |
| 4 | 82000 | 50,9 | 27,2 | | 21,9 | 2,0 |

Beispiel 5

In einem 6 1-Rührkessel werden 500 g Polyester C, 1000 g Polysiloxan 1 vorgelegt. Unter Stickstoff wird auf 110°C erwärmt. Dann wird unter Rühren eine Lösung aus 500 g Polyester C, 1000 g Polysiloxan 1, 1000 g Vinylacetat und 3,0 g tert. Butylperpivalat hinzugegeben. Nach beendeter Zugabe wird der Ansatz 1 h nachgerührt. Die flüchtigen Anteile werden über eine Destillationsbrücke bei 26,6 mbar (20 Torr) und 120°C Sumpftemperatur abgezogen. Man erhält eine Dispersion mit einer Viskosität von 52500 mPas und der folgenden Zusammensetzung: 25,3 Gew.-% Polycarbonat, 50,6 Gew.-% Polysiloxan, 24,1 Gew.-% polymerisierte Einheiten aus Vinylacetat.

Die nach dem hier beschriebenen Verfahren hergestellten Massen wurden mit Hilfe von Vernetzern und die Vernetzung fördernden Katalysatoren nach folgender Rezeptur abgemischt und unter dem Einfluß von Luftfeuchtigkeit ausgehärtet:

200 g Copfropfpolymerisat

10,4 g eines Titankomplexes der folgenden ungefähren Zusammensetzung

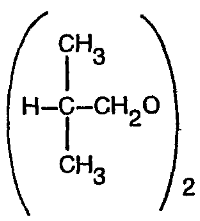

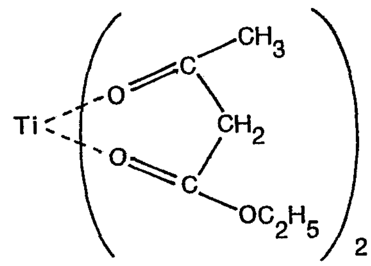

11,4 g Bis-(N-methylbenzamido)-ethoxymethylsilan

2,2 g Dibutylzinndiacetat

Die vernetzten Produkte sind elastisch und klebfrei. Sie wurden mit einem Alkydallack angestrichen, dessen Haftung auf dem Silicon nach 7 Tagen mit Hilfe des Gitterschnittestes ermittelt wurde, indem auf der lackierten Oberfläche ein Quadrat von 2,54 cm Kantenlänge mit einer Rasierklinge in 100 gleich große quadratische Stücke zerschneidet, so daß man eine bemalte Oberfläche mit gitterförmigem Aussehen erhält. Auf dieses Gitter wird dann ein Klebstreifen (Tesafilm Nr. 101 der Fa. Beiersdorf AG, Hamburg) fest aufgepreßt. Der Klebstreifen wird hierauf entfernt, indem man ihn unter einen Winkel von etwa 30°C langsam abzieht. Der prozentuale Wert für die Retention des Lackes ergibt sich aus der Anzahl der bemalten, quadratischen Stück, die nach dem Entfernen des Klebstreibens auf der gehärteten Zubereitung verblieben. Die physikalischen Eigenschaften, sowie die Ergebnisse des Gitterschnittests gehen aus der folgenden Tabelle hervor. Für die Vergleichsbeispiele 6 und 7 wurden Polysiloxan 1 im Beispiel 6 und Polysiloxan 4 im Beispiel 7 an Stelle der Copfropfpolymerisate verwendet.

| Beispiel Nr. | Lackverlauf | Lackhaftung (%) | E-Modul (100% Dehnung) (N/mm²) | Reißfestigk. (N/mm²) | Bruchdehnung (%) |
|---|---|---|---|---|---|
| 1 | gut | 100 | 0,195 | 0,550 | 409 |
| 2 | gut | 95 | 0,106 | 0,314 | 568 |
| 3 | gut | 31 | 0,091 | 0,385 | 567 |
| 4 | gut | 46 | 0,170 | 0,431 | 431 |
| 5 | gut | 94 | 0,437 | 0,899 | 454 |
| 6 | schlecht | 0 | 0,141 | 0,299 | 295 |
| 7 | schlecht | 18 | 0,097 | 0,313 | 544 |

**Patentansprüche**

1. Bei Raumtemperatur härtbare, stabile Copfropfpolymerisatdispersionen, erhältlich durch Pfropfpolymerisation von Vinylmonomeren in Gegenwart von Mischungen aus Erst- und Zweitpolymeren, wobei als Erstpolymer OH-funktionelle Diorganopolysiloxane der Formel

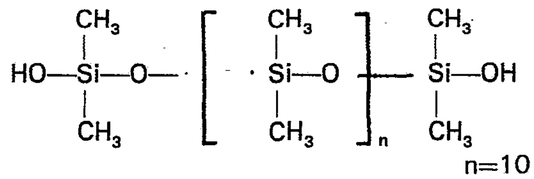

n=10 bis 5000

wobei die Methylgruppen bis zu 30 Mol.-% durch Ethyl-, Vinyl- oder Phenylgruppen ersetzt sein können und als Zweitpolymere 1) durch Umsetzung mit Mono- oder Polyisocyanaten urethanisierte aliphatische oder gemischt aliphatisch-aromatische Polyester mit einem Molekulargewicht von etwa 800 bis 10 000, einer OH-Zahl zwischen 0,1 und 80, und/oder Polycarbonaten oder 2) durch Umsetzung mit Mono- oder Polyisocyanaten urethanisierte Gemische aus den genannten Polyester und/oder Polycarbonaten einerseits und aliphatischen Polyethern bzw. Polythioethern mit 1—8 OH-Gruppen andererseits, eingesetzt werden und wobei Copfropfpolymerisatdispersionen erhalten werden, die über Vinylpolymerisatbrücken verknüpfte Pfropfpolymere aus Erst- und Zweitpolymeren enthalten und die aus

I. 10—90 Gew.-% endständig OH-funktionellen Organopolysiloxanen
II. 5—85 Gew.-% durch Umsetzung mit Mono- oder Polyisocyanaten urethanisierte aliphatische oder gemischt aliphatisch-aromatische Polyester und/oder Polycarbonate gegebenenfalls im Gemisch mit durch Umsetzung mit Mono- oder Polyisocyanaten urethanisierten Polyethern und
III. 5—85 Gew.-% polymerisierten Einheiten aus Vinylverbindungen bestehen,

wobei die Summe der Komponenten I—III stets 100% beträgt.

2. Copfropfpolymerisatdispersionen nach Anspruch 1, dadurch gekennzeichnet, daß die Komponente III aus

5—85 Gew.-% polymerisierten Einheiten aus Vinylacetat sowie
0—40 Gew.-% polymerisierten Einheiten aus (Meth)Acrylsäurealkylester mit 1—8 C-Atomen in der Esteralkylkomponente, (Meth)-Acrylsäureamid, N-Alkylsubstituierten (Meth)-Acrylsäureamiden, Maleinimiden, (Meth)-Acrylnitril sowie ihren Gemischen besteht.

3. Copfropfpolymerisatdispersionen nach einem der Ansprüche 1 bis 2, dadurch gekennzeichnet, daß die Komponente III aus

5—85 Gew.-% polymerisierten Einheiten aus

a) 5—90 Gew.-% Styrol,
b) 10—95 Gew.-% (Meth)-Acrylsäurealkylestern mit 1—8 C-Atomen in der Esteralkylkomponente,
c) 0—85 Gew.-% (Meth)Acrylnitril

besteht, wobei die Summe der Komponenten IIIa)—c) stets 100% beträgt.

4. Verfahren zur Herstellung von Copfropfpolymerisatdispersionen gemäß einem der Ansprüche 1—3, dadurch gekennzeichnet, daß Mischungen aus

a) 8—90 Gew.-% endständig OH-funktionellen Organopolysiloxanen,
b) 4,999—85 Gew.-% aliphatischen oder gemischt aliphatisch-aromatischen Polyesterurethanen oder Polyesterurethanen und Polyestern oder Polycarbonaten und gegebenenfalls Polyetherurethanen und Polyethern
c) 5—85 Gew.-% eines oder mehrerer Vinylmonomerer,
d) 0,001—2 Gew.-% eines oder mehrerer Radikalbildner

wobei die Summe der Komponenten a)—d) stets 100% beträgt, bei Temperaturen bis 250°C einer Polymerisationsreaktion unterzogen werden.

5. Verfahren zur Herstellung von Copfropfpolymerisatdispersionen nach Anspruch 4, dadurch gekennzeichnet, daß Mischungen aus

a) 8—90 Gew.-% endständig OH-funktionellen Organopolysiloxanen,
b) 4,999—80 Gew.-% aliphatischen oder gemischt aliphatisch-aromatischen Polyestern oder Polycarbonaten und gegebenenfalls Polyethern,
c) 4,9—80 Gew.-% eines oder mehrerer Vinylmonomerer,

d) 0,001—2 Gew.-% eines oder mehrerer Radikalbildner,
e) 0,1—10 Gew.-% Mono-, Di- oder Polyisocyanaten,

wobei die Summe der Komponenten a)—e) stets 100% beträgt, bei Temperaturen bis 250°C einer Polymerisations- und Urethanisierungsreaktion unterzogen werden.

6. Bei Raumtemperatur vernetzbare Organopolysiloxanmassen, die Copfropfpolymerisatdispersionen nach einem der Ansprüche 1 bis 3 und zusätzlich Vernetzer, Härtungskatalysatoren, Füllstoffe und gegebenenfalls weitere Zuschlagstoff enthalten.

7. Verwendung von bei Raumtemperatur vernetzbaren Organopolysiloxanmassen, die Copfropfpolymerisatdispersionen, nach einem der Ansprüche 1—3 enthalten, als Ein- oder Zweikomponentensystem für Dichtungsmassen.

**Revendications**

1. Dispersions de copolymères greffés stables et durcissables à la température ambiante que l'on obtient par polymérisation greffée de monomères vinyliques en présence de mélanges de premiers et de deuxièmes polymères en utilisant, comme premiers polymères, des diorganopolysiloxanes à fonction OH de formule:

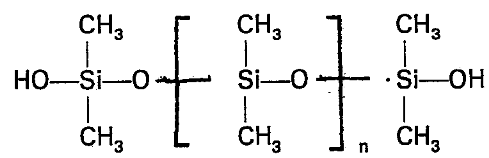

n=10 à 5.000

les groupes méthyle pouvant être remplacés jusqu'à 30% molaires par des groupes éthyle, vinyle ou phényle et, comme deuxièmes polymères: 1) des polyesters aliphatiques ou aliphatico-aromatiques mixtes uréthanisés par réaction avec des mono- ou des polyisocyanates et ayant un poids moléculaire d'environ 800 à 10.000, un indice OH se situant entre 0,1 et 80 et/ou des polycarbonates ou 2) des mélanges (uréthanisés par réaction avec des mono- ou des polyisocyanates) des polyesters mentionnés et/ou de polycarbonates d'une part, et de polythioéthers ou de polyéthers aliphatiques contenant 1 à 8 groupes OH, d'autre part, pour obtenir des dispersions de copolymères greffés qui contiennent des polymères greffés des premiers et deuxièmes polymères reliés par des ponts de polymères vinyliques et qui sont constituées de:

I. 10—90% en poids d'organopolysiloxanes à fonction OH terminale,
II. 5—85% en poids de polyesters aliphatiques ou aliphatico-aromatiques mixtes uréthanisés par réaction avec des mono- ou des polyisocyanates et/ou de polycarbonates éventuellement en mélange avec des polyéthers uréthanisés par réaction avec des mono- ou des polyisocyanates, et
III. 5—85% en poids de motifs polymérisés de composés vinyliques, la somme des composants I—III étant constamment de 100%.

2. Dispersions de copolymères greffés suivant la revendication 1, caractérisées en ce que le composant III est constitué de

5—85% en poids de motifs polymérisés d'acétate de vinyle, ainsi que de
0—40% de poids de motifs polymérisés d'esters alkyliques d'acide (méth)acrylique contenant 1 à 8 atomes de carbone dans le composant alkyle d'ester, d'amide d'acide (méth)acrylique, d'amides d'acide (méth)acrylique substitués par un groupe N-alkyle, de maléinimides, de (méth)acrylonitrile, ainsi que de leurs mélanges.

3. Dispersions de copolymères greffés suivant une des revendications 1 et 2, caractérisées en ce que le composant III est constitué de 5—85% en poids de motifs polymérisés de

a) 5—90% en poids de styrène,
b) 10—95% en poids d'esters alkyliques d'acide (méth)acrylique contenant 1—8 atomes de carbone dans le composant alkyle d'ester,
c) 0—85% en poids de (méth)acrylonitrile, la somme des composants IIIa)—c) étant constamment de 100%.

4. Procédé de préparation de dispersions de copolymères greffés suivant une des revendications 1 à 3, caractérisé en ce qu'on soumet, à une réaction de polymérisation à des températures allant jusqu'à 250°C, des mélanges de

(a) 8—90% en poids d'organopolysiloxanes à fonction OH terminale,

(b) 4,999—85% en poids de polyesteruréthanes aliphatiques ou aliphatico-aromatiques mixtes ou de polyesteruréthanes et de polyesters ou de polycarbonates et éventuellement de polyéther-uréthanes et de polyéthers,

(c) 5—85% en poids d'un ou de plusieurs monomères vinyliques,

(d) 0,001—2% en poids d'un ou de plusieurs formateurs de radicaux, la somme des composants (a)—(d) étant constamment de 100%.

5. Procédé de préparation de dispersions de copolymères greffés suivant la revendication 4, caractérisé en ce qu'on soumet, à une réaction de polymérisation et d'uréthanisation à des températures allant jusqu'à 250°C, des mélanges de

a) 8—90% en poids d'organopolysiloxanes à fonction OH terminale,

b) 4,999—80% en poids de polyesters aliphatiques ou aliphatico-aromatiques mixtes ou de polycarbonates et éventuellement de polyéthers,

c) 4,9—80% en poids d'un ou de plusieurs monomères vinyliques,

d) 0,001—2% en poids d'un ou de plusieurs formateurs de radicaux,

e) 0,1—10% en poids de mono-, de di- ou de polyisocyanates, la somme des composants a)—e) étant constamment de 100%.

6. Masses d'organopolysiloxanes réticulables à la température ambiante qui contiennent des dispersions de copolymères greffés suivant une des revendications 1 à 3 et, en outre, des agents de réticulation, des catalyseurs de durcissement, des charges et éventuellement d'autres additifs.

7. Utilisation de masses d'organopolysiloxanes réticulables à la température ambiante qui contiennent des dispersions de copolymères greffés suivant une des revendications 1—3, comme système à un ou à deux composants pour matériaux d'étanchéité.

**Claims**

1. Stable co-grafted polymer dispersions which can be cured at room temperature and are obtainable by graft polymerisation of vinyl monomers in the presence of mixtures of first and second polymers, wherein diorganopolysiloxanes with OH functional groups, of the formula

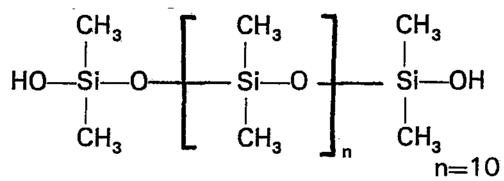

n=10 to 5000

wherein up to 30 mol % of the methyl groups can be replaced by ethyl, vinyl or phenyl groups, are used as the first polymer, and 1) aliphatic or mixed aliphatic-aromatic polyesters which have been urethanised by reaction with mono- or polyisocyanates and have a molecular weight of about 800 to 10,000 and an OH number between 0.1 and 80, and/or polycarbonates or 2) mixtures of the stated polyesters and/or polycarbonates on the one hand and/or aliphatic polyethers or polythioethers with 1—8 OH groups on the other hand, which mixtures have been urethanised by reaction with mono- or polyisocyanates, are used as the second polymers, and wherein co-grafted polymer dispersions are obtained which contain graft polymers of first and second polymers linked via vinyl polymer bridges and which consist of

I. 10—90% by weight of organopolysiloxanes with terminal OH functional groups,

II. 5—85% by weight of aliphatic or mixed aliphatic-aromatic polyesters which have been urethanised by reaction with mono- or polyisocyanates, and/or polycarbonates, optionally in admixture with polyethers which have been urethanised by reaction with mono- or polyisocyanates and

III. 5—85% by weight of polymerised units of vinyl compounds, the sum of components I—III always being 100%.

2. Co-grafted polymer dispersions according to Claim 1, characterised in that component III consists of

5—85% by weight of polymerised units of vinyl acetate and

0—40% by weight of polymerised units of alkyl (meth)acrylates with 1—8 C atoms in the alkyl component, (meth)acrylamide, N-alkyl-substituted (meth)acrylamides, maleimides or (meth)acrylonitrile or mixtures thereof.

3. Co-grafted polymer dispersions according to one of Claims 1 to 2, characterised in that component III consists of 5—85% by weight of polymerised units of

a) 5—90% by weight of styrene,
b) 10—95% by weight of alkyl (meth)acrylates with 1—8 C atoms in the alkyl component, and
c) 0—85% by weight of (meth)acrylonitrile, the sum of components IIIa)—c) always being 100%.

4. Process for the preparation of co-grafted polymer dispersions according to one of Claims 1—3, characterised in that mixtures of

a) 8—90% by weight of organopolysiloxanes with terminal OH functional groups,
b) 4.999—85% by weight of aliphatic or mixed aliphatic-aromatic polyester-urethanes or polyester-urethanes and polyesters or polycarbonates and optionally polyether-urethanes and polyethers
c) 5—85% by weight of one or more vinyl monomers, and
d) 0.001—2% by weight of one or more radical-forming agents,

the sum of components a)—d) always being 100%, are subjected to a polymerisation reaction at temperatures of up to 250°C.

5. Process for the preparation of co-grafted polymer dispersions according to Claim 4, characterised in that mixtures of

a) 8—90% by weight of organopolysiloxanes with terminal OH functional groups,
b) 4.999—80% by weight of aliphatic or mixed aliphatic-aromatic polyesters or polycarbonates and optionally polyethers,
c) 4.9—80% by weight of one or more vinyl monomers,
d) 0.001—2% by weight of one or more radical-forming agents, and
e) 0.1—10% by weight of mono-, di- or polyisocyanates,

the sum of components a)—e) always being 100%, are subjected to a polymerisation and urethanisation reaction at temperatures of up to 250°C.

6. Organopolysiloxane compositions which can be crosslinked at room temperature and which contain co-grafted polymer dispersions according to one of Claims 1 to 3 and in addition crosslinking agents, curing catalysts, fillers and, if appropriate, other additives.

7. Use of organopolysiloxane compositions which can be crosslinked at room temperature and which contain co-grafted polymer dispersions according to one of Claims 1—3, as a one- or two-component system for sealing compositions.